# EUROPÄISCHE PATENTANMELDUNG

(11) **EP 2 589 981 A1**
(43) Veröffentlichungstag der Anmeldung: **08.05.2013**
(21) Anmeldenummer: 11188054.8
(22) Anmeldetag: 07.11.2011
(51) Int. Cl.: G01S 17/46

(54) **Verfahren und Sensor, insbesondere Kamera, zum Bestimmen von Entfernungen**

(71) Anmelder: SICK AG, 79183 Waldkirch (DE)
(72) Erfinder: Blöhbaum, Frank, 79312 Emmendingen (DE)
(74) Vertreter: Ludewigt, Christoph

(57) **Zusammenfassung**

Die Erfindung betrifft ein Verfahren zum Bestimmen von Entfernungen zwischen einem entfernungsmessenden optoelektronischen Sensor, insbesondere einer Kamera, und einem Objekt mit den Schritten:
a) in einem Referenzbetrieb, Bestimmung von Referenzmustern mit determinierter Struktur, wobei sich die Struktur mit der Entfernung kontinuierlich über den gesamten relevanten Entfernungsbereich ändert, sowie deren Zuordnung zu einer Entfernung zwischen Sensor und Objektoberfläche und Ablegen dieser Referenzmuster in einem Speicher,
b) Bestimmen der Entfernung zu dem Objekt in einem Arbeitsbetrieb mit den Schritten:
- Beleuchten des Sichtfeldes mit Lichtstrahlen einer Lichtquelle und Erzeugen eines aktuellen Objektmusters mit der determinierten Struktur auf zumindest einem Teil des Objekts,
- Abbilden des Objektmusters auf einen Empfänger,
- Vergleichen des Objektmusters mit zumindest einem Teil zumindest eines der Referenzmuster,
- Bestimmen der Entfernung des Teils des Objekts aus dem Vergleich.

Weiter umfasst die Erfindung einen entsprechenden Sensor.

## Beschreibung

Die Erfindung betrifft ein Verfahren und einen Sensor, insbesondere eine Kamera gemäß dem Oberbegriff des Anspruchs 1 bzw. 5.

In der industriellen Automatisierung werden zunehmend mehrdimensionale Sensoren, z.B. entfernungsmessende Kameras (3-D Kameras) eingesetzt. Bekannte 3-D Kameras basieren auf folgenden verschiedenen Techniken:
- Lichtschnittverfahren
- Stereoverfahren
- Time-Of-Flight Verfahren (TOF)
- Triangulationsverfahren
- Mustervergleich

Zum letztgenannten Verfahren, das auch die Erfindung betrifft, ist es aus der EP 1884804 B1 bekannt, ein Bild in das Sichtfeld eines Bildaufnehmers mittels einer Mehrzonenoptik abzubilden, so dass in unterschiedlichen Messabständen unterschiedliche Beleuchtungsmuster entstehen. Anhand des Bildes auf einem Objekt lässt sich dann aus der Erkennung des Beleuchtungsmusters auf den Abstand zurückschließen. Nachteilig an diesem Verfahren ist die große Ungenauigkeit und die sehr aufwändige Optik. Aufgrund der wenigen Muster, die sich damit erzeugen lassen, kann die Entfernung nur grob bereichsweise bestimmt werden.

Aus der US 7,433,024 ist es bekannt, mittels eines Lasers Specklemuster zu erzeugen. Wenn die Specklemuster zuvor an verschiedenen Entfernungen eingelernt wurden, kann über einen Mustervergleich die Entfernung des Objekts bestimmt werden. Nachteilig daran ist,
- dass nur dieses eine Objekt entfernungsmäßig bestimmt werden kann, da die Specklemuster abhängig sind von der Oberfläche und damit von dem Objekt,
- dass die entstehenden Specklemuster hochgradig von den Eigenschaften des verwendeten Lasers abhängen und so bei Verwendung preisgünstiger Halbleiter-Laserdioden ohne Modenstabilisierung die Specklemuster ihre Struktur ständig ändern,
- dass die entstehenden Specklemuster nicht deterministisch sind, also für eine vorgegebene Objektoberfläche und den aktuellen Ist-Zustand des Lasers eingelernt werden müssen.

Damit ist dieses Verfahren für eine robuste Anwendung im industriellen Umfeld ungeeignet. Außerdem sind Specklemuster auf Objekten, die nur in geringfügig unterschiedlicher Entfernung angeordnet sind, sehr ähnlich, so dass eine Entfernungsbestimmung auch nur stufenweise erfolgen kann, wobei die Stufen so groß sein müssen, dass die Specklemuster sich ausreichend unterscheiden. Insgesamt ist dieses Verfahren damit nicht nur sehr stark limitiert, sondern auch aufwändig.

Aus der GB 2395261 A ist eine Vorrichtung zur Entfernungsbestimmung bekannt, bei der ein Punktmuster auf den zu messenden Gegenstand projiziert wird und die Position eines einzelnen Punktes bestimmt wird. Die Struktur des Punktmusters selbst ändert sich nicht mit der Entfernung. Lediglich aufgrund der Divergenz der Beleuchtung ändert sich der Maßstab des Musters. Aufgrund der Parallaxe ist die Position eines auf den Empfänger abgebildeten Punktes jedoch entfernungsabhängig, wodurch die Entfernung dieses Punktes aus der Position bestimmbar ist. Dazu ist es notwendig, dass die Punkte identifizierbar sind. Die GB 2395261 A beschreibt hierzu eine Vielzahl von Möglichkeiten, die Punkte unterscheidbar zu machen. Das Erkennen der einzelnen Punkte erfordert dabei einen erhöhten Aufwand für den Kamerasensor, da jeder einzelne Punkt mittels einer Vielzahl von Kamerapixeln abgetastet bzw. erfasst werden muss, um eine zuverlässige Unterscheidung der Form des jeweiligen Punktes zu gewährleisten.

Ausgehend von diesem Stand der Technik ist es Aufgabe der Erfindung ein verbessertes Verfahren zur Entfernungsbestimmung und eine entsprechende Entfernung messende Kamera bereitzustellen, die die genannten Nachteile vermeidet.

Diese Aufgabe wird gelöst durch ein Verfahren nach Anspruch 1 bzw. einen Sensor mit den Merkmalen des Anspruchs 5.

Das erfindungsgemäße Verfahren zum Bestimmen von Entfernungen zwischen einem entfernungsmessenden optoelektronischen Sensor, insbesondere einer Kamera, und einem Objekt umfasst die Schritte:
a) in einem Referenzbetrieb, Bestimmung von Referenzmustern mit determinierter Struktur, wobei sich die Struktur mit der Entfernung kontinuierlich über den gesamten relevanten Entfernungsbereich ändert, sowie deren Zuordnung zu einer Entfernung zwischen Sensor und Objektoberfläche und Ablegen dieser Referenzmuster in einem Speicher,
b) Bestimmen der Entfernung zu dem Objekt in einem Arbeitsbetrieb mit den Schritten:
   - Beleuchten des Sichtfeldes mit Lichtstrahlen einer Lichtquelle und Erzeugen eines aktuellen Objektmusters mit der determinierten Struktur auf zumindest einem Teil des Objekts,
   - Abbilden des Objektmusters auf einen Empfänger,
   - Vergleichen des Objektmusters mit zumindest einem Teil zumindest eines der Referenzmuster,
   - Bestimmen der Entfernung des Teils des Objekts aus dem Vergleich.

Ein entsprechender erfindungsgemäßer Sensor umfasst eine Lichtquelle zum Beleuchten des Sichtfeldes mit Lichtstrahlen und Erzeugen eines

Beleuchtungsmusters mit determinierter Struktur, wobei die Struktur abhängig ist von der Entfernung und sich kontinuierlich über den gesamten relevanten Entfernungsbereich ändert, eine Empfangsoptik zum Abbilden des Beleuchtungsmusters auf einen Empfänger, eine Speichereinheit zum Speichern der Beleuchtungsmuster und eine Auswerteeinheit mit einer Vergleichseinheit zum Vergleichen zumindest eines Teils des Objektmusters mit zumindest einem Teil zumindest eines gespeicherten Referenzmusters und mit einer Entfernungsbestimmungseinheit zum Bestimmen der Entfernung des Teils des Objekts aus dem Vergleich.

Ein erfindungsgemäßer Sensor kann sehr kompakt und kostengünstig hergestellt werden. Das erfindungsgemäße Verfahren erlaubt eine Auflösung und Genauigkeit, die für die verschiedenen Applikationen skalierbar ist. Des Weiteren ist vorteilhaft, dass zur Herstellung kostengünstige Bauelemente ohne spezielle Halbleiterprozesse eingesetzt werden können. Der Vergleich von Bildmusterstrukturen erlaubt grundsätzlich eine einfache Signalverarbeitung. Aufgrund dieser Einfachheit ist es denkbar, den erfindungsgemäßen Sensor und das erfindungsgemäße Verfahren auch für sicherheitsrelevante Lösungen auszubilden und einzusetzen.

Der Referenzbetrieb, in dem die Muster mit jeweils determinierter Struktur den Entfernungen zugeordnet werden, also im Wesentlichen die Strukturen den Entfernungen zugeordnet werden, kann auf verschiedene Arten bewerkstelligt werden.

In einer ersten Variante werden während des Herstellungsprozesses in einer Kalibrierung einmalig für die realisierte Geräteklasse prototypische Referenzmuster aufgenommen und gespeichert, wobei zunächst ein Kalibriersichtfeld mit den Lichtstrahlen der Lichtquelle beleuchtet wird, wobei die Lichtstrahlen auf einem Referenzobjekt im Sichtfeld ein Referenzmuster mit der determinierten Struktur erzeugen, wobei sich die Struktur mit der Entfernung kontinuierlich über den gesamten relevanten Entfernungsbereich ändert und dann die Referenzmuster mit einer Empfangsoptik auf den Empfänger abgebildet und bei unterschiedlichen, bekannten Entfernungen aufgenommen und gespeichert werden.

In einer anderen Variante werden am Einbauort des Sensors die Referenzmuster in dem Referenzbetrieb aufgenommen und gespeichert, wobei das Sichtfeld mit den die determinierte Struktur erzeugenden Lichtstrahlen beleuchtet wird und die Referenzmuster bei unterschiedlichen, bekannten Entfernungen aufgenommen und gespeichert werden.

In einer weiteren Variante werden die Referenzmuster im Referenzbetrieb mathematisch für die verschiedenen Entfernungen berechnet. Dann ist sogar kein apparativer Referenzbetrieb notwendig. Das ist selbstverständlich nur dann möglich, wenn der Verlauf der Lichtstrahlen, also die Abbildungseigenschaften der Lichtquelle, bekannt sind.

Wenn zur Bestimmung der Entfernung zusätzlich eine Interpolation zwischen einzelnen Referenzmustern erfolgt, kann die Entfernung stetig über den gesamten Entfernungsbereich der jeweiligen Anwendung bestimmt werden.

In einer Alternative des erfindungsgemäßen Verfahrens ist die Lichtquelle ausgebildet, die Struktur des Beleuchtungsmusters über eine Regelgröße gezielt zu beeinflussen und zur Bestimmung der Entfernung wird nach Vergleich mit mindestens einem Referenzmuster die Struktur des Beleuchtungsmusters so geändert, dass sie dem Referenzmuster entspricht und die dafür notwendige Regelgröße zur Bestimmung der Entfernung herangezogen. Damit können auf einfache Weise elektronisch ohne sonstigen Aufwand die Entfernungen zwischen den Referenzentfernungen bestimmt werden.

In einfacher Weise können die Beleuchtungsmuster durch eine Lichtquelle erzeugt werden, die eine Laserlichtquelle und ein diffraktiv-optisches Element (DOE) umfasst. Damit ließen sich die verschiedensten und mit der Entfernung sich ändernde Beleuchtungsmuster erzeugen. Das DOE kann wiederum als Folie, auf einem Glasträger, auf Silizium oder auch programmierbar, z.B. mittels LCD oder LCoS realisiert werden.

Soll lediglich ein Punktmuster erzeugt werden, wäre es alternativ auch denkbar, dass die Lichtquelle ein VCSEL-Array und ein Mikrolinsenarray umfasst oder in noch einfacherer Ausführung wenigstens eine LED und wenigstens ein Mikrolinsenarray umfasst.

In Weiterbildung der Erfindung kann die erzeugte Struktur des Beleuchtungsmusters ein Punktmuster oder ein sich mit der Entfernung drehendes geometrisches Muster sein.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Gesamtansicht des erfindungsgemäßen Sensors mit auf eine Fläche projizierten Beleuchtungsmuster;
- Fig. 2 bis 4: schematische Darstellungen von Ausführungsformen der Lichtquelle mit projiziertem Beleuchtungsmuster.

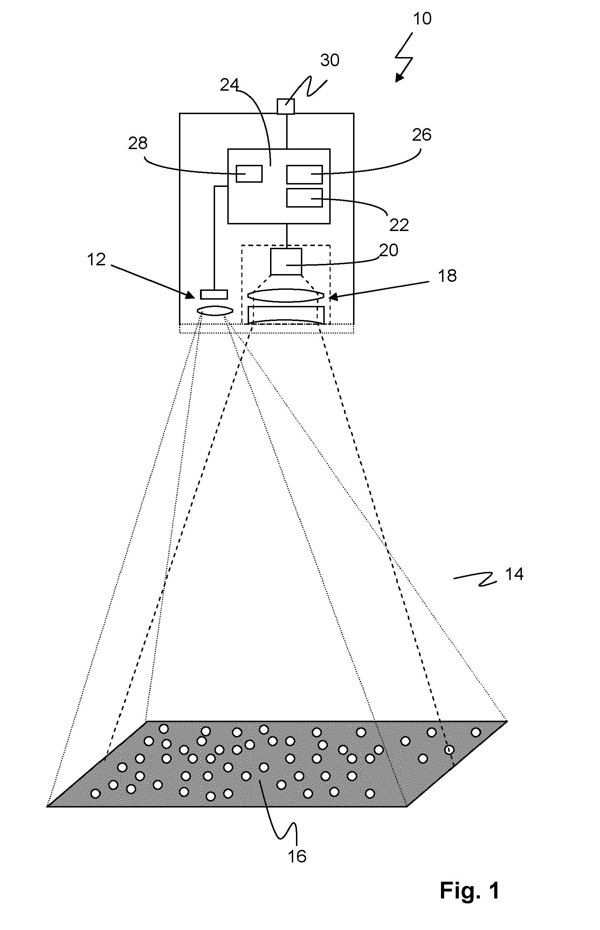

Ein in Fig. 1 dargestellter erfindungsgemäßer Sensor 10 umfasst eine Lichtquelle 12 zum Beleuchten des Sichtfeldes 14 mit Lichtstrahlen und Erzeugen eines Beleuchtungsmusters 16 mit einer geometrischen Struktur, wobei die Struktur, wie unten noch näher erläutert, abhängig ist von der Entfernung und sich kontinuierlich über den gesamten relevanten Entfernungsbereich ändert. Des Weiteren umfasst der Sensor 10 eine Empfangsoptik 18 zum Abbilden des Beleuchtungsmusters 16 auf einen Empfänger 20, eine Speichereinheit 22 zum Speichern der Beleuchtungsmuster 16 und eine Auswerteeinheit 24 mit einer Vergleichseinheit 26 zum Vergleichen verschiedener aktuell aufgenommener Muster mit gespeicherten Mustern und mit einer Entfernungsbestimmungseinheit 28 zum Bestimmen der Entfernung wenigstens eines beleuchteten Teils eines Objekts im Sichtbereich 14 aus dem Vergleich. Über einen Ausgang 30 sind die Entfernung und sonstige Daten, z.B. das komplette Bild mit Tiefendaten, ausgebbar.

Die erfinderische Idee liegt einerseits in der Art und Weise der Beleuchtung und andererseits wie daraus eine Entfernungsinformation gewonnen wird.

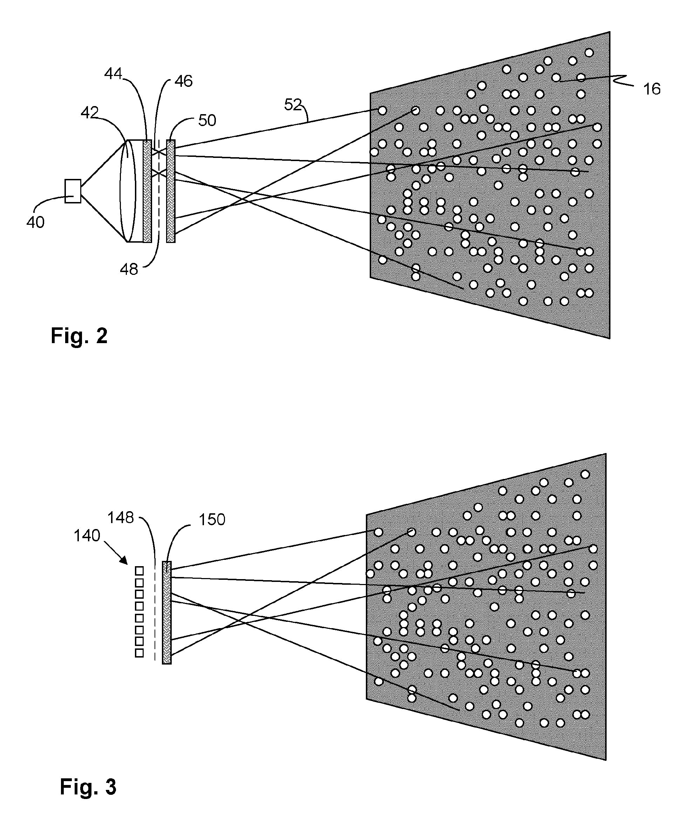

Verschiedene Ausführungsformen der Lichtquelle und damit erzeugter Beleuchtungsmuster sind in den Fig. 2 bis 4 dargestellt und werden später beschrieben. Zunächst soll zum besseren Verständnis das erfindungsgemäße Verfahren erklärt werden.

Zunächst wird in einem Referenzbetrieb eine Vielzahl von Referenzmustern aufgenommen, wobei jedes Referenzmuster bei einer anderen Entfernung aufgenommen wurde, so dass für eine Vielzahl von Entfernungen Referenzmuster vorliegen, die dem Beleuchtungsmuster bei diesen Entfernungen entsprechen.

Durch die Lichtquelle ist dabei sichergestellt, dass die Referenzmuster an den verschiedenen Entfernungen unterschiedlich sind. Dies kann zum Beispiel dadurch erfolgen, dass die Lichtquelle eine Vielzahl einzelner Lichtstrahlen aussendet, wobei die Lichtstrahlen in verschiedene Richtungen ausgerichtet sind, wobei diese Richtungen keinen Zusammenhang haben müssen, und beispielsweise zufällig ausgewählt sein können. Dann ist das sich ergebende Beleuchtungsmuster ein Punktmuster, das bei jeder Entfernung eine andere Struktur aufweist. Das Beleuchtungsmuster könnte auch zum Beispiel durch ein DOE (diffraktiv optisches Element) erzeugt werden, wobei das DOE derart ausgebildet ist, dass sich das ergebende Beleuchtungsmuster mit der Entfernung dreht. Auch dann ist sichergestellt, dass bei jeder Entfernung ein anderes Beleuchtungsmuster vorliegt.

Die Struktur des Beleuchtungsmusters soll in diesem Zusammenhang als determinierte Struktur bezeichnet werden, womit zum Ausdruck gebracht werden soll, dass es sich hierbei nicht um eine zeitlich variante und objektabhängige Speckle-Struktur handelt, sondern eine mathematisch exakt bestimmte Funktion die Struktur des Beleuchtungsmusters vorgibt.

Die so erzeugten Referenzmuster werden über die Empfangsoptik auf den Empfänger abgebildet, aufgenommen und in einem Speicher abgelegt, so dass in dem Speicher ein Vielzahl von Referenzmustern für jede Referenzentfernung vorliegen.

Damit ist die Aufnahme der Referenzmuster abgeschlossen und der normale Arbeitsbetrieb kann beginnen.

Alternativ können die Referenzmuster auch ausschließlich auf Basis der mathematisch bekannten Funktionen erzeugt werden, die dem Design der Lichtquelle zugrunde liegen.

In dem Arbeitsbetrieb wird ein Beleuchtungsmuster in das Sichtfeld abgebildet. Befindet sich im Sichtfeld ein Objekt, so wird dies mit dem Beleuchtungsmuster beleuchtet und vom Empfänger ein Objektmuster aufgenommen.

Das Objektmuster, dass selbstverständlich nicht das gesamte Sichtfeld ausfüllen muss, sondern sich zum Beispiel lediglich aus einem Teilbereich des Sichtfeldes und damit zum Beispiel auch nur einem Teil des Objektes zusammensetzt, wird dann mit den Referenzmustern verglichen. Bei Vergleich mit den Referenzmustern wird dasjenige Referenzmuster gefunden, das die größte Ähnlichkeit mit dem Objektmuster hat, wodurch gleichzeitig die Entfernung des Objekts, auf dem das Objektmuster abgebildet ist, bestimmt ist.

Damit ist im Wesentlichen die Entfernung des Teils des Objekts, auf dem das Objektmuster abgebildet ist, bestimmt. Wird dies für sämtliche Teile des beleuchteten Objekts durchgeführt, erhält man insgesamt eine Tiefenkarte.

Da nur eine endliche Anzahl von Referenzmustern aufgenommen wurde, kann über den Mustervergleich nur eine ungefähre Entfernungsbestimmung vorgenommen werden. Um dies zu verbessern kann aber zusätzlich eine Interpolation zwischen einzelnen Referenzmustern erfolgen, so dass die Entfernung noch genauer bestimmt werden kann. Dies ist zum Beispiel bei Beleuchtungsmustern sehr einfach der Fall, bei denen sich das Beleuchtungsmuster mit der Entfernung nach einem mathematischen Zusammenhang ändert, beispielsweise wenn sich das Beleuchtungsmuster mit der Entfernung dreht.

Im Folgenden werden nun einzelne Ausführungsbeispiele der Lichtquelle des erfindungsgemäßen Sensors und entsprechende Beleuchtungsmuster beschrieben.

Fig. 2 zeigt eine Ausführungsform, bei der das Licht durch eine LED 40 erzeugt wird, das durch eine Sammellinse 42 parallelisiert wird. Über ein erstes Mikrolinsenarray 44 wird das Licht vereinzelt in einzelne Lichtstrahlen 46, die eine Lochblende 48 durchtreten und über ein zweites Mikrolinsenarray 50 schließlich in den Sichtbereich 14 gelenkt werden. Auf diese Weise sind eine Vielzahl einzelner Lichtstrahlen 52 erzeugt worden, die entsprechend der Positionen der Lochblende und der Mikrolinsenarrays zueinander die verschiedensten Richtungen aufweisen und dadurch ein Punktmuster 16 erzeugen. Durch die unterschiedlichen Richtungen der Lichtstrahlen 52 ist die Struktur dieses Punktmusters abhängig von der Entfernung des Objektes, auf dem das Muster erzeugt wird.

Die Fig. 3 zeigt die Erzeugung des gleichen Punktmusters, hier allerdings mittels eines VCSEL-Arrays 140, einer Lochblende 148 und eines Mikrolinsenarrays 150.

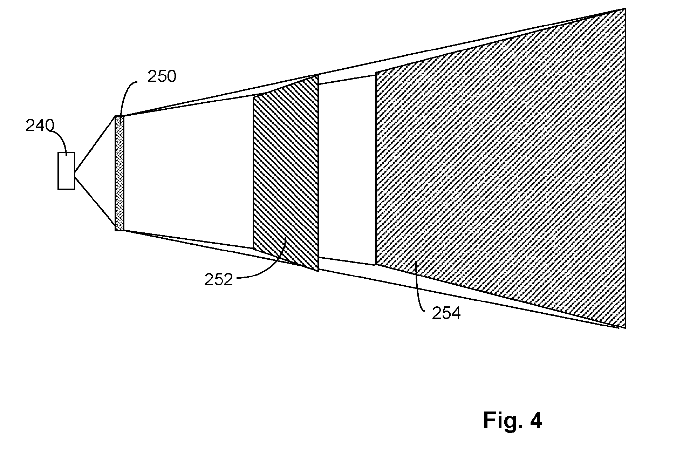

In einer weiteren Ausführungsform, die in Fig. 4 dargestellt ist, kann das Beleuchtungsmuster auch durch eine Lichtquelle erzeugt werden, die eine Laserlichtquelle 240 und ein diffraktiv-optisches Element (DOE) 250 umfasst. Damit lassen sich die verschiedensten und mit der Entfernung sich ändernde Beleuchtungsmuster erzeugen. In dem dargestellten Ausführungsbeispiel besteht dieses Beleuchtungsmuster aus einem Streifenmuster, dass sich mit der Entfernung dreht, dessen Streifenstruktur also eine von der Entfernung abhängige Ausrichtung hat, wie dies schematisch in Fig. 4 anhand der beiden exemplarischen Positionen 252 und 254 dargestellt ist.

In einer weiteren Ausführungsform der Erfindung kann beispielsweise anstelle der Lochblende 148 aus Fig. 3 eine programmierbare LCD-Einheit vorgesehen sein. Mit dieser programmierbaren LCD-Einheit lässt sich die Struktur des Beleuchtungsmusters, also des Punktmusters, über eine Regelgröße gezielt beeinflussen. Wird jetzt bei der Entfernungsbestimmung über den Vergleich mit den verschiedenen Referenzmustern festgestellt, dass das Punktmuster zwischen zwei Referenzmustern liegt, kann über die Regelgröße das aktuelle Objektmuster so verändert werden, dass es mit einem Referenzmuster übereinstimmt. Aus der Regelgröße lässt sich dann auch eine Entfernung herausrechnen, so dass über den Mustervergleich zunächst eine Grobbestimmung der Entfernung erfolgt und über die Regelgröße eine Feinbestimmung, so dass insgesamt die Entfernung sehr genau bestimmt werden kann.

## Patentansprüche

1. Verfahren zum Bestimmen von Entfernungen zwischen einem entfernungsmessenden optoelektronischen Sensor, insbesondere einer Kamera, und einem Objekt mit den Schritten:
a) in einem Referenzbetrieb, Bestimmung von Referenzmustern mit determinierter Struktur, wobei sich die Struktur mit der Entfernung kontinuierlich über den gesamten relevanten Entfernungsbereich ändert, sowie deren Zuordnung zu einer Entfernung zwischen Sensor und Objektoberfläche und Ablegen dieser Referenzmuster in einem Speicher,
b) Bestimmen der Entfernung zu dem Objekt in einem Arbeitsbetrieb mit den Schritten:
- Beleuchten des Sichtfeldes mit Lichtstrahlen einer Lichtquelle und Erzeugen eines aktuellen Objektmusters mit der determinierten Struktur auf zumindest einem Teil des Objekts,
- Abbilden des Objektmusters auf einen Empfänger,
- Vergleichen des Objektmusters mit zumindest einem Teil zumindest eines der Referenzmuster,
- Bestimmen der Entfernung des Teils des Objekts aus dem Vergleich.

2. Verfahren nach Anspruch 1, **dadurch gekennzeichnet, dass** der Referenzbetrieb folgende Schritte umfasst:
- Beleuchten des Sichtfeldes mit den Lichtstrahlen, wobei die Lichtstrahlen auf einem Referenzobjekt im Sichtfeld ein Referenzmuster mit der determinierten Struktur erzeugen,
- Abbilden des Referenzmusters mit einer Empfangsoptik auf den Empfänger,
- Aufnehmen und Speichern der Referenzmuster bei unterschiedlichen, bekannten Entfernungen.

3. Verfahren nach Anspruch 1, **dadurch gekennzeichnet, dass** in dem Referenzbetrieb die Referenzmuster mathematisch für die verschiedenen Entfernungen berechnet werden.

4. Verfahren nach einem der vorhergehenden Ansprüche, **dadurch gekennzeichnet, dass** zur Bestimmung der Entfernung zusätzlich eine Interpolation zwischen einzelnen Referenzmustern erfolgt.

5. Verfahren nach einem der vorhergehenden Ansprüche, **dadurch gekennzeichnet, dass** die Lichtquelle ausgebildet ist, die Struktur des Beleuchtungsmusters über eine Regelgröße gezielt zu beeinflussen und zur Bestimmung der Entfernung nach Vergleich mit mindestens einem Referenzmuster die Struktur des Beleuchtungsmusters so geändert wird, dass sie dem Referenzmuster entspricht und die dafür notwendige Regelgröße zur Bestimmung der Entfernung herangezogen wird.

6. Entfernungsmessender optoelektronischer Sensor, insbesondere Kamera, zum Bestimmen von Entfernungen zwischen dem Sensor und einem Objekt, mit einer Lichtquelle zum Beleuchten des Sichtfeldes mit Lichtstrahlen und Erzeugen eines Beleuchtungsmusters mit determinierter Struktur, wobei die Struktur abhängig ist von der Entfernung und sich kontinuierlich über den gesamten relevanten Entfernungsbereich ändert, mit einer Empfangsoptik zum Abbilden des Beleuchtungsmusters auf einen Empfänger, mit einer Speichereinheit zum Speichern der Beleuchtungsmuster und mit einer Auswerteeinheit mit einer Vergleichseinheit zum Vergleichen zumindest eines Teils des Objektmusters mit zumindest einem Teil zumindest eines gespeicherten Referenzmusters und mit einer Entfernungsbestim-mungseinheit zum Bestimmen der Entfernung des Teils des Objekts aus dem Vergleich.

7. Sensor nach Anspruch 6, **dadurch gekennzeichnet, dass** die Lichtquelle eine Laserlichtquelle und ein diffraktives optisches Element (DOE) umfasst.

8. Sensor nach Anspruch 6, **dadurch gekennzeichnet, dass** die Lichtquelle ein VCSEL-Array und ein Mikrolinsenarray umfasst.

9. Sensor nach Anspruch 6, **dadurch gekennzeichnet, dass** die Lichtquelle wenigstens eine LED und wenigstens ein Mikrolinsenarray umfasst.

10. Sensor nach einem der vorhergehenden Ansprüche 6 bis 9, **dadurch gekennzeichnet, dass** die damit erzeugte Struktur des Beleuchtungsmusters ein Punktmuster ist.

11. Sensor nach einem der vorhergehenden Ansprüche 6 bis 9, **dadurch gekennzeichnet, dass** die damit erzeugte Struktur des Beleuchtungsmusters ein sich mit der Entfernung drehendes geometrisches Muster ist.

## Geänderte Patentansprüche

### Geänderte Patentansprüche gemäss Regel 137(2) EPÜ.

**1.** Verfahren zum Bestimmen von Entfernungen zwischen einem entfernungsmessenden optoelektronischen Sensor (10), insbesondere einer Kamera, und einem Objekt mit den Schritten:
a) in einem Referenzbetrieb, Bestimmung von Referenzmustern (16), sowie deren Zuordnung zu einer Entfernung zwischen Sensor (10) und Objektoberfläche und Ablegen dieser Referenzmuster (16) in einem Speicher (22),
b) Bestimmen der Entfernung zu dem Objekt in einem Arbeitsbetrieb mit den Schritten:
- Beleuchten des Sichtfeldes (14) mit Lichtstrahlen (52) einer Lichtquelle (12) und Erzeugen eines aktuellen Objektmusters mit der determinierten Struktur auf zumindest einem Teil des Objekts,
- Abbilden des Objektmusters auf einen Empfänger (20),
- Vergleichen des Objektmusters mit zumindest einem Teil zumindest eines der Referenzmuster (16),
- Bestimmen der Entfernung des Teils des Objekts aus dem Vergleich
**dadurch gekennzeichnet,**
**dass** die Referenzmuster (16) Punktmuster (16) sind und eine determinierte Struktur aufweisen, wobei sich die Struktur mit der Entfernung kontinuierlich über den gesamten relevanten Entfernungsbereich ändert und die Punktmuster (16) erzeugt werden durch Aussenden einer Vielzahl einzelner Lichtstrahlen (52), wobei die Lichtstrahlen (52) in verschiedene Richtungen ausgerichtet sind und sich teilweise kreuzen, so dass durch die unterschiedlichen Richtungen der Lichtstrahlen (52) die Struktur des Punktmusters (16) abhängig ist von der Entfernung eines Objektes, auf dem ein Muster (16) erzeugt wird.

**2.** Verfahren nach Anspruch 1, **dadurch gekennzeichnet, dass** der Referenzbetrieb folgende Schritte umfasst:
- Beleuchten des Sichtfeldes mit den Lichtstrahlen, wobei die Lichtstrahlen auf einem Referenzobjekt im Sichtfeld ein Referenzmuster mit der determinierten Struktur erzeugen,
- Abbilden des Referenzmusters mit einer Empfangsoptik auf den Empfänger,
- Aufnehmen und Speichern der Referenzmuster bei unterschiedlichen, bekannten Entfernungen.

**3.** Verfahren nach Anspruch 1, **dadurch gekennzeichnet, dass** in dem Referenzbetrieb die Referenzmuster mathematisch für die verschiedenen Entfernungen berechnet werden.

**4.** Verfahren nach einem der vorhergehenden Ansprüche, **dadurch gekennzeichnet, dass** zur Bestimmung der Entfernung zusätzlich eine Interpolation zwischen einzelnen Referenzmustern erfolgt.

**5.** Entfernungsmessender optoelektronischer Sensor (10), insbesondere Kamera, zum Bestimmen von Entfernungen zwischen dem Sensor (10) und einem Objekt, mit einer Lichtquelle (12) zum Beleuchten des Sichtfeldes (14) mit Lichtstrahlen (52) und Erzeugen eines Beleuchtungsmusters (16), mit einer Empfangsoptik (18) zum Abbilden des Beleuchtungsmusters (16) auf einen Empfänger (20), mit einer Speichereinheit (22) zum Speichern der Beleuchtungsmuster (16) und mit einer Auswerteeinheit (24) mit einer Vergleichseinheit (26) zum Vergleichen zumindest eines Teils des Objektmusters mit zumindest einem Teil zumindest eines gespeicherten Referenzmusters (16) und mit einer Entfernungsbestimmungseinheit zum Bestimmen der Entfernung des Teils des Objekts aus dem Vergleich, **dadurch gekennzeichnet, dass** die Referenzmuster (16) Punktmuster (16) sind mit determinierter Struktur und die Lichtstrahlen (52) in verschiedene Richtungen ausgerichtet sind und sich teilweise kreuzen, so dass durch die unterschiedlichen Richtungen der Lichtstrahlen (52) die Struktur des Punktmusters (16) abhängig ist von der Entfernung eines Objektes, auf dem ein Muster (16) erzeugt wird und die Struktur sich kontinuierlich über den gesamten relevanten Entfernungsbereich ändert.

**6.** Sensor nach Anspruch 5, **dadurch gekennzeichnet, dass** die Lichtquelle ein VCSEL-Array und ein Mikrolinsenarray umfasst.

**7.** Sensor nach Anspruch 5, **dadurch gekennzeichnet, dass** die Lichtquelle wenigstens eine LED und wenigstens ein Mikrolinsenarray umfasst.
